# EUROPÄISCHE PATENTSCHRIFT

(11) **EP 1 889 503 B1**
(45) Veröffentlichungstag und Bekanntmachung des Hinweises auf die Patenterteilung: **15.09.2010**
(21) Anmeldenummer: 06725686.7
(22) Anmeldetag: 10.04.2006
(51) Int. Cl.: H04W 12/02

(54) **VERFAHREN ZUR VEREINBARUNG EINES SICHERHEITSSCHLÜSSELS ZWISCHEN MINDESTENS EINEM ERSTEN UND EINEM ZWEITEN KOMMUNIKATIONSTEILNEHMER ZUR SICHERUNG EINER KOMMUNIKATIONSVERBINDUNG**
METHOD FOR AGREEING ON A SECURITY KEY BETWEEN AT LEAST ONE FIRST AND ONE SECOND COMMUNICATIONS STATION FOR SECURING A COMMUNICATIONS LINK
PROCEDE POUR CONVENIR D'UNE CLE DE SECURITE ENTRE AU MOINS UN PREMIER ET UN DEUXIEME ABONNE POUR SECURISER UNE COMMUNICATION

(30) Priorität: 10.06.2005 DE 102005026982
(43) Veröffentlichungstag der Anmeldung: 20.02.2008
(73) Patentinhaber: SIEMENS AKTIENGESELLSCHAFT, 80333 München (DE)
(72) Erfinder: HORN, Günther, 81541 München (DE); BLOMMAERT, Marc, B-9140 Temse (BE)
(86) Internationale Anmeldenummer: PCT/EP2006/061489
(87) Internationale Veröffentlichungsnummer: WO 2006/131414

(56) Entgegenhaltungen:
- EP-A- 1 213 943
- US-A1- 2005 102 501
- "Alternative approach to 2G GBA" 3GPP TSG SA WG3 SECURITY - SA3#37 S3-050097, 21. Februar 2005 (2005-02-21), XP002387740 Sophia Antipolis, France in der Anmeldung erwähnt
- "Introducing 2G GBA" 3GPP TSG SA WG3 SECURITY - SA2#37 S3-050053, 21. Februar 2005 (2005-02-21), XP002387741 Sophia Antipolis, France in der Anmeldung erwähnt
- JORMALAINEN S AND LAINE J: "Security in the WTLS" COMPUTER SCIENCE AND ENGINEERING, HELSINKI UNIVERSITY OF TECHNOLOGY, 3. November 1999 (1999-11-03), XP002167503

## Beschreibung

Die vorliegende Erfindung betrifft ein Verfahren und ein Computerprogrammprodukt zur Vereinbarung eines Sicherheitsschlüssels zwischen mindestens einem ersten und einem zweiten Kommunikationsteilnehmer zur Sicherung einer Kommunikationsverbindung.

Für Mobilfunksysteme der dritten Generation ist aus den Spezifikationen von 3GPP ein Verfahren bekannt, nach dem aus der langfristigen Sicherheitsbeziehung zwischen einem Benutzer und einem Netzbetreiber eine kurzfristige Sicherheitsbeziehung zwischen einem Benutzer und einer Kommunikationsnetzeinrichtung abgeleitet wird. Die langfristige Sicherheitsbeziehung basiert auf einem langfristigen geheimen kryptographischen Schlüssel, der in einem Sicherheitsmodul des Benutzers, einer so genannten UMTS-SIM-Karte (technisch genauer: USIM-Applikation auf einer UICC-Karte) und im Authentifikationszentrum des Netzbetreibers gespeichert ist. Aus diesem langfristigen Schlüssel wird durch das so genannte GBA-Verfahren (GBA = Generic Bootstrapping Architecture) ein kurzfristiger Schlüssel Ks abgeleitet, indem Nachrichten zwischen einem Endgerät (UE = User Equipment), einer Recheneinheit im Kommunikationsnetz (BSF = Bootstrapping Server Function) sowie einem Kommunikationsnetzteilnehmersystem (HSS = Home Subscriber Server) ausgetauscht werden. Dieser kurzfristige Schlüssel wird zur Sicherung der Kommunikation zwischen einem mobilen Kommunikationsendgerät eines Benutzers und einer weiteren Kommunikationsnetzeinrichtung (NAF = Network Application Function)verwendet unter Verwendung einer weiteren Schlüsselableitungsfunktion als Ks_NAF. Das GBA-Verfahren, welches in 3G TS 33.220 spezifiziert ist, basiert auf dem UMTS AKA-Protokoll (AKA = Authentication and Key Agreement). Dieses Protokoll ist in 3G TS 33.102 spezifiziert und setzt zwingend das Vorhandensein einer USIM-Applikation beim Benutzer voraus. Das UMTS AKA-Protokoll erzeugt hierbei in sicherer Weise Sitzungsschlüssel CK und IK mit einer Länge von je 128 Bit. Wie vorgeschrieben in TS 33.220 wird aus den Sitzungsschlüsseln CK und IK der kurzfristige Schlüssel Ks_NAF zur Sicherung der Kommunikation zwischen dem mobilen Kommunikationsendgerät eines Benutzers und einer Kommunikationsnetzeinrichtung abgeleitet.

Die Verbreitung von mobilen Kommunikationsendgeräten nach dem UMTS-Standard ist allerdings noch lange nicht so weit fortgeschritten wie die Verbreitung von mobilen Kommunikationsendgeräten nach dem GSM-Standard. Somit sind auch die SIM-Karten, wie sie in jedem GSM-Mobilfunktelefon Verwendung finden, wesentlich verbreiteter als die immer noch selten anzutreffenden UMTS-SIM-Karten. Es besteht aber auch für GSM-Netzbetreiber ein erhebliches Interesse, sichere Verbindungen zwischen einem mobilen Kommunikationsendgerät und einer Kommunikationsnetzeinrichtung für GSM-Nutzer bereit zu stellen. Ziel eines aktuellen Standardisierungsprojekts mit dem Namen 2G GBA ist es daher, ein der GBA entsprechendes Verfahren zur Sicherung einer Kommunikation zu definieren, welches an Stelle von UMTS-SIM-Karten und des UMTS AKA-Protokolls , entweder eine SIM-Karte oder eine SIM-Applikation auf einer UICC-Karte und das GSM AKA-Protokoll verwendet.

Ein Grund für die Verfolgung dieses Projekts ist die Erwartung an ein zukünftiges 2G GBA Verfahren, zum Zweck der sicheren Kommunikation eines mobilen Kommunikationsendgerätes mit einer Kommunikationsnetzeinrichtung keine neue langfristige Sicherheitsbeziehung zum Benutzer aufbauen zu müssen. Demnach soll vermieden werden, dass neue UMTS-SIM-Karten an die Benutzer verteilt werden müssen, was immer mit hohen Kosten für einen Netzbetreiber verbunden ist. Es sollen also die beim Benutzer vorhandenen SIM-Karten oder SIM-Applikationen auf der UICC-Karte weiter benutzt werden, wodurch eine schon existierende Beziehung zwischen einem Benutzer und einem Netzbetreiber genutzt werden kann.

Problematisch ist hierbei, dass das GSM AKA-Protokoll eine erheblich niedrigere Sicherheit bietet als das UMTS AKA-Protokoll. Außerdem sind die durch das GSM AKA-Protokoll erzeugten Sitzungsschlüssel für viele Zwecke zu kurz (maximal 64 Bit). Darüber hinaus werden die Sitzungsschlüssel von unsicheren Algorithmen verwendet, wie beispielsweise den GSM Verschlüsselungsalgorithmen A5/1 und A5/2. Es besteht daher die Gefahr, dass diese Sitzungsschlüssel durch einen Angreifer in Erfahrung gebracht und die Sicherheit eines 2G GBA-Verfahrens hiermit vollständig kompromittiert werden könnte.

Somit liegt der vorliegenden Erfindung die Aufgabe zugrunde, ein aus Mobilfunksystemen der dritten Generation bekanntes GBA-Verfahren durch möglichst geringe Modifikationen unter Einsatz des GSM AKA-Protokolls und der SIM derart zu erweitern, dass das Sicherheitsniveau bei einer Kommunikation von einem mobilen Kommunikationsendgerät und einer Kommunikationsnetzeinrichtung gegenüber dem GSM AKA-Protokoll weiter erhöht wird.

Eine weitere Aufgabe der vorliegenden Erfindung besteht darin, ein Verfahren zur Vereinbarung eines Sicherheitsschlüssels zwischen mindestens einem ersten und einem zweiten Kommunikationsteilnehmer zur Sicherung einer Kommunikationsverbindung durch geeignete Maßnahmen derart zu verbessern, dass das Sicherheitsniveau für die Kommunikation erhöht wird und das verbesserte Verfahren hierbei auf schon vorhandenen Verfahren aufsetzt.

Erfindungsgemäß wird diese Aufgabe durch ein Verfahren und ein Computerprogrammprodukt mit den in Anspruch 1 und Anspruch 16 angegebenen Merkmalen gelöst. Vorteilhafte Weiterbildungen der vorliegenden Erfindung sind in den abhängigen Ansprüchen angegeben.

Entsprechend der vorliegenden Erfindung wird in einem Verfahren zur Vereinbarung eines Sicherheitsschlüssels zwischen mindestens einem ersten und einem zweiten Kommunikationsteilnehmer zur Sicherung einer Kommunikationsverbindung aus einem Authentifikations- und Schlüsselableitungsprotokoll zumindest ein erster Parameter ermittelt. Darüber hinaus überträgt der zweite Kommunikationsteilnehmer einen zusätzlichen Parameter verschüsselt an den ersten Kommunikationsteilnehmer wobei das zur verschlüsselten Übertragung des zusätzlichen Parameters verwendete Verschlüsselungsprotokoll unabhängig von dem Authentifikations- und Schlüsselableitungsprotokoll ist. Aus dem ersten Parameter und dem zusätzlichen Parameter wird schließlich der Sicherheitsschlüssel ermittelt.

Gemäß einer Ausgestaltung der vorliegenden Erfindung ist der zusätzliche Parameter eine Zufallszahl oder eine Verkettung einer Zufallszahl mit weiteren Daten.

Gemäß einer weiteren Ausgestaltung der vorliegenden Erfindung ist die in dem zusätzlichen Parameter enthaltene Zufallszahl Bestandteil des Authentifikations- und Schlüsselableitungsprotokolls, aus dem der erste Parameter ermittelt wird.

Gemäß einer weiteren Ausgestaltung der vorliegenden Erfindung ist der erste Kommunikationsteilnehmer als ein mobiles Kommunikationsendgerät und der zweite Kommunikationsteilnehmer als Kommunikationsnetzeinrichtung ausgeführt.

Gemäß einer vorteilhaften Weiterentwicklung der vorliegenden Erfindung authentifiziert sich der zweite Kommunikationsteilnehmer gegenüber dem ersten Kommunikationsteilnehmer über ein Zertifikat mit einem öffentlichen Schlüssel.

Gemäß einer weiteren vorteilhaften Weiterentwicklung der vorliegenden Erfindung authentifiziert sich der erste Kommunikationsteilnehmer gegenüber dem zweiten Kommunikationsteilnehmer über das Authentizitäts- und Schlüsselableitungsprotokoll, aus dem der erste Parameter abgeleitet wird.

Gemäß einer weiteren vorteilhaften Weiterbildung der vorliegenden Erfindung authentifiziert sich der erste Kommunikationsteilnehmer gegenüber dem zweiten Kommunikationsteilnehmer mit Hilfe eines dritten, auf die Verwaltung von Nutzern des Kommunikationsnetzes spezialisierten Kommunikationsteilnehmers.

Nach einer bevorzugten Ausführungsvariante ist der erste Kommunikationsteilnehmer als ein User Equipment gemäß der Mobilfunkspezifikation gemäß 3GPP, der zweite Kommunikationsteilnehmer als eine Bootstrapping Server Function gemäß der Mobilfunkspezifikation 3G TS 33.220 und der dritte Kommunikationsteilnehmer als ein Home Subscriber System gemäß der Mobilfunkspezifikation 3G TS 33.220 ausgeführt.

Gemäß einer weiteren bevorzugten Ausführungsvariante wird zur vertraulichen Übertragung des zusätzlichen Parameters als Sicherheitsprotokoll das Transport Layer Security Protocol gemäß der Spezifikation RFC 2246 oder mit Erweiterungen gemäß der Spezifikation RFC 3546 verwendet.

Gemäß einer weiteren bevorzugten Ausführungsvariante wird das Authentifikations- und Schlüsselableitungsprotokoll für die Ermittlung des ersten Parameters gemäß der Mobilfunkspezifikation 3G TS 43.020 ausgeführt.

Gemäß einer weiteren Ausgestaltung werden die Parameter des Authentifikations- und Schlüsselableitungsprotokolls für die Ermittlung des ersten Parameters in geeigneter Form in Feldern übermittelt, die gemäß der Spezifikation RFC 3310 für das HTTP Digest AKA (Authentication and Key Agreement) definiert sind.

Nach einer weiteren Ausgestaltung erfolgt die Übertragung der Parameter gemäß der Spezifikation TS 33.220.

Gemäß einer weiteren Ausgestaltung wird der zusätzliche Parameter in geeigneter Form in Feldern übermittelt, die gemäß der Spezifikation RFC 3310 für das HTTP Digest AKA (Authentication and Key Agreement) definiert sind.

Nach einer weiteren Ausgestaltung umfassen die Felder "RAND" und "Server Specific Data".

Bei der Ausführung des erfindungsgemäßen Computerprogrammprodukts zur Vereinbarung eines Sicherheitsschlüssels zwischen mindestens einem ersten und einem zweiten Kommunikationsteilnehmer zur Sicherung einer Kommunikationsverbindung wird aus einem Authentifikations- und Schlüsselableitungsprotokoll zumindest ein erster Parameter ermittelt. Darüber hinaus überträgt der zweite Kommunikationsteilnehmer einen zusätzlichen Parameter verschlüsselt an den ersten Kommunikationsteilnehmer, wobei das zur verschlüsselten Übertragung des zusätzlichen Parameters verwendete Verschlüsselungsprotokoll unabhängig vom Authentifikations- und Schlüsselvereinbarungsprotokoll ist. Aus dem ersten Parameter und dem zusätzlichen Parameter wird der Sicherheitsschlüssel ermittelt, wenn das Steuerungsprogramm in der Programmablaufsteuerungseinrichtung abläuft.

Die vorliegende Erfindung wird nachfolgend an einem Ausführungsbeispiel anhand der Zeichnungen näher erläutert. Es zeigt
- Figur 1: ein schematisches Netzwerkmodell der Entitäten, die in einem Bootstrapping Verfahren involviert sind, und die zwischen den Entitäten benutzten Refe- renzpunkte,
- Figur 2: schematisch ein Bootstrapping Verfahren mit 2G Authentifikationsvektoren.

Bevor die Kommunikation zwischen dem User Equipment (UE) 101 und der Network Application Function (NAF) 103 starten kann, müssen sich das UE und die NAF zunächst darauf verständigen, ob sie nach der Generic Bootstrapping Architecture (GBA) Prozedur verfahren wollen. In einem ersten Schritt startet das UE 101 die Kommunikation über einen Referenzpunkt Ua 102 mit der NAF 103 ohne irgendeinen GBA relevanten Parameter. Wenn die NAF den Gebrauch von Schlüsseln erfordert, die durch ein GBA Verfahren erhalten werden, aber die Anfrage durch das UE keine GBA relevanten Parameter enthält, antwortet die NAF mit einer Bootstrapping Initiationsnachricht.

Wenn das UE 101 mit einer NAF 103 interagieren möchte und weiß, dass nach der Bootstrapping Prozedur verfahren wird, soll es zunächst eine Bootstrapping Authentifizierung vornehmen. Anderenfalls soll das UE eine Bootstrapping Authentifizierung nur dann vornehmen, wenn es eine Nachricht über eine benötigte Bootstrapping Initiierung oder eine Aufforderung zur Bootstrapping Neuverhandlung von NAF erhalten hat, oder wenn die Laufzeit des Schlüssels Ks im UE abgelaufen ist.

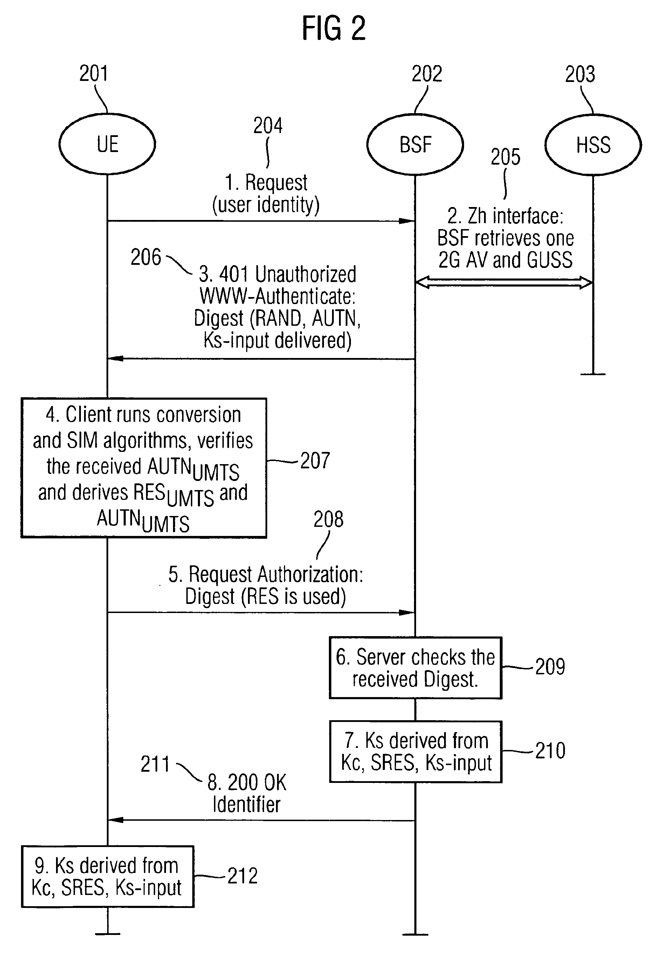

Hierzu sendet das UE 201 eine HTTPS-Anforderung 204 über den Referenzpunkt Ub 105 (siehe Figur 2) an die Bootstrapping Server Function (BSF) 202. Diese initiierende HTTPS-Anforderung und alle weitere Kommunikation zwischen dem UE und der BSF werden über einen geschützten Transport Layer Security (TLS) Kanal gesendet. Beim Aufbau dieses TLS Kanals authentifiziert das UE die BSF über ein von der BSF bereit gestelltes Zertifikat. Das UE überprüft hierbei, ob das "REALM" Attribut denselben Fully Qualified Domain Name (FQDN) der BSF enthält, wie dasjenige, welches in dem von der BSF bereitgestellten Zertifikat enthalten ist.

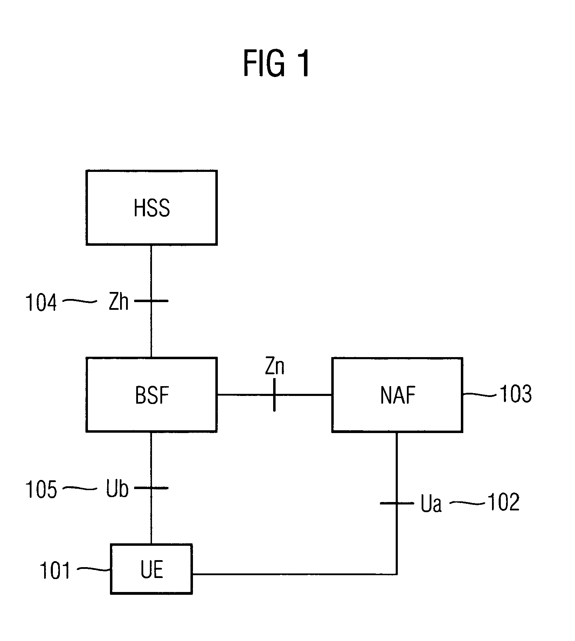

Die BSF 202 fordert Authentifizierungsvektoren und GBA User Security Settings (GUSS) 205 vom Home Subscriber System (HSS) 203 über den Referenzpunkt Zh (siehe Figur 1, 104) an. Das HSS sendet den kompletten Satz von GBA User Security Settings (GUSS) und einen 2G Authentifizierungsvektor (AV = RAND, SRES, Kc) 205 über den Zh Referenzpunkt zurück. Durch den AV-Typ weiß die BSF, dass das UE mit einem 2G SIM ausgestattet ist. Die BSF konvertiert den 3G Authentifizierungsvektor (RAND, Kc, SRES) zu den Parametern RAND_{UMTS}, RES_{UMTS} und AUTN_{UMTS} eines Pseudo 3G Authentifizierungsvektor. Eine Konversion in Sitzungsschlüssel CK und IK eines 3G Authentifizierungsvektors) ist dabei nicht notwendig:
- RAND_{UMTS} = RAND
- RES_{UMTS} = KDF (Key, "3GPP-GBA-RES" ∥ SRES), gekürzt auf 128 Bits
- AUTN_{UMTS} = KDF (Key, "3GPP-GBA-AUTN" ∥ RAND), gekürzt auf 128 Bits, wobei Key = Kc ∥ Kc ∥ RAND ist und KDF die Key Derivation Function spezifiziert in Annex B in TS 33.220 ist. "gekürzt auf 128 Bits" bedeutet dabei, dass von den 256 Ausgabebits von KDF die 128 bits mit den Nummern 0 bis 127 gewählt werden.

Die BSF muss auch eine Zufallszahl "Ks-input" wählen und Server Specific Data = Ks-Input im Feld "aka-nonce" von HTTP Digest AKA setzen.

Um das UE aufzufordern, sich selbst zu authentifizieren, leitet die BSF Server Specific Data (d.h. Ks-Input), RAND_{UMTS} und AUTN_{UMTS} in einer "401" Nachricht 206 an das UE weiter.

Das UE extrahiert RAND aus der Nachricht und berechnet die korrespondierenden Kc und SRES-Werte 207. Anschließend berechnet das UE die Pseudo 3G Authentifizierungsvektorenparameter RAND_{UMTS}, RES_{UMTS} und AUTN_{UMTS} aus diesen Werten. Das UE vergleicht das berechnete AUTN_{UMTS} mit dem korrespondierenden Wert, welcher von der BSF erhalten wurde. Das UE bricht die Prozedur ab, wenn die Werte nicht übereinstimmen. Das UE sendet eine weitere HTTP-Anforderung mit einer Digest AKA Antwort an die BSF 208, wobei RES_{UMTS} als Passwort verwendet wird.

Die BSF authentifiziert das UE durch Verifizieren der Digest AKA Antwort 209. Wenn die Authentifizierung fehlschlägt, sollte die BSF diesen Authentifizierungsvektor in keiner weiteren Kommunikation wieder verwenden.

Die BSF erzeugt Schlüsselmaterial Ks 210 durch Berechnung von Ks = KDF (Key ∥ Ks-Input, "3GPP-GBA-Ks" ∥ SRES). Der Bootstrapping Transaction Identifier (B-TID) Wert soll im NAI-Format erzeugt werden durch Heranziehung eines Base 64 encodierten RAND_{UMTS} Wertes und des BSF Servernamens, beispielsweise Base64encode (RAND_{UMTS})@BSF_Servers_Domain_Name.

Die BSF sendet eine 200 OK-Nachricht zusammen mit der B-TID zum UE 211, um den Erfolg der Authentifizierung zu bestätigen. Zusätzlich übermittelt die BSF in der 200 OK-Nachricht die Laufzeit des Schlüssels Ks.

Das UE generiert das Schlüsselmaterial Ks in derselben Weise wie die BSF 212.

Das UE und die BSF nutzen beide das Schlüsselmaterial Ks zur Ableitung des Schlüsselmaterials Ks_NAF, um den Referenzpunkt Ua zu schützen. Ks_NAF wird berechnet über Ks_NAF = KDF (Ks, Key Derivation Parameters), wobei KDF die in Annex B spezifizierte Key Derivation Function ist und die Schlüsselableitungsparameter aus der Benutzer IMPI, der NAF_ID und der RAND_UMTS bestehen. Die NAF_ID besteht aus dem vollen DNS Namen der NAF. Um eine konsistente Schlüsselableitung basierend auf dem NAF Namen in dem UE und der BSF zu gewährleisten, sollte zumindest eine der folgenden drei Voraussetzungen erfüllt sein:
1. Die NAF ist in DNS nur unter einem Domainnamen (FQDN) bekannt, es sollten beispielsweise also nicht zwei verschiedene Domainnamen auf die IP-Adresse der NAF verweisen. Dies wird durch administrative Maßnahmen erreicht.
2. Jeder DNS-Eintrag der NAF verweist auf eine unterschiedliche IP-Adresse. Die NAF antwortet auf all diese IP-Adressen. Jede IP-Adresse ist an die korrespondierende FQDN durch NAF Konfiguration gebunden. Die NAF kann anhand der IP-Adresse erkennen, welche FQDN für die Schlüsselableitung benutzt werden sollte.
3. Der Referenzpunkt Ua benutzt ein Protokoll, das den Hostnamen zur NAF mit übermittelt. Dies zwingt die NAF die Gültigkeit des Hostnamen zu überprüfen, um diesen Namen in allen Kommunikationen mit dem UE zu gebrauchen, wenn es angebracht ist, und diesen Namen zur BSF zu übermitteln, um eine korrekte Ableitung des Schlüsselmaterials Ks_NAF zu gewährleisten.

Das UE und die BSF sollten den Schlüssel Ks zusammen mit der dazugehörigen B-TID speichern, bis die Laufzeit des Schlüssels Ks abgelaufen ist oder bis der Schlüssel Ks erneuert wird.

Wenn der Schlüssel Ks_NAF für den korrespondierenden Schlüsselableitungsparameter NAF_ID vorhanden ist, können das UE und die NAF mit einer sicheren Kommunikation über den Referenzpunkt Ua beginnen.

Bisher sind zwei Lösungsvorschläge für ein solches 2G GBA Verfahren bekannt, die in den Beiträgen S3-050053 von Nokia und S3-050097 von Qualcomm bei der relevanten Standardisierungsgruppe 3GPP SA3 vorgestellt wurden.

Der Beitrag S3-050053 von Nokia löst das Problem der zu kurzen GSM-Sitzungsschlüssel Kc dadurch, dass er für eine Instanz des 2G GBA Verfahrens mehrere Instanzen des GSM AKA Protokolls, die so genannten GSM Triplets verwendet. Hierdurch erhält man mehrere Sitzungsschlüssel Kc, die dann zu einem ausreichend langen kurzfristigen Schlüssel kombiniert werden. Das GSM AKA Protokoll wird hier für die Authentifikation des Benutzers gegenüber dem Netz, für die Authentifikation des Netzes gegenüber dem Benutzer und für die Vereinbarung von Sitzungsschlüsseln verwendet. Als Trägerprotokoll für das GSM AKA Protokoll wird das Protokoll HTTP Digest AKA gemäß der Spezifikation RFC 3310 verwendet, wobei die Parameter des GSM AKA Protokolls durch Konversionsfunktionen geeignet angepasst werden.

Der Beitrag S3-050097 von Qualcomm verwendet für die Vereinbarung von Sitzungsschlüsseln das Diffie Hellman Verfahren. Die Authentifikation des Netzes gegenüber dem Benutzer basiert auf der Verwendung von Zertifikaten und einer digitalen Signatur über Parameter des Diffie Hellman Verfahrens. Das GSM AKA Protokoll wird nur für die Authentifikation des Benutzers gegenüber dem Netz verwendet, wobei der GSM Schlüssel Kc zur Bildung eines Message Authentication Codes (MAC) über Parameter des Diffie Hellman Verfahrens verwendet wird.

Demgegenüber löst die vorliegende Erfindung gemäß dem Ausführungsbeispiel das oben beschriebene Problem auf folgende Weise:

Das erfindungsgemäße Verfahren verwendet als Trägerprotokoll für das GSM AKA Protokoll das HTTP Digest AKA Protokoll gemäß der Spezifikation RFC 3310, wobei die Parameter des GSM AKA Protokolls durch geeignete Konversionsfunktionen angepasst werden. Es wird hierbei nur eine Instanz des GSM AKA Protokolls pro 2G GBA Instanz verwendet. Zusätzlich wird der Aufbau einer Transport Layer Security Verbindung (TLS) gemäß der Spezifikation RFC 2246 zwischen mobilen Kommunikationsendgerät und BSF vorgenommen. Bei dieser TLS Verbindung wird eine starke Verschlüsselung aktiviert. Die Authentifizierung der BSF gegenüber dem mobilen Kommunikationsendgerät erfolgt beim Aufbau dieser TLS Verbindung zertifikatsbasiert. Das mobile Kommunikationsendgerät wird jedoch beim Aufbau der TLS Verbindung nicht authentifiziert. Die Authentifizierung des mobilen Kommunikationsendgerätes gegenüber der BSF erfolgt durch die Verwendung von GSM AKA eingebettet in das HTTP Digest AKA Protokoll.

Hierdurch ergibt sich die vorteilhafte Wirkung, dass die Sicherheit des kurzfristigen Schlüssels nach dem vorliegenden Verfahren sowohl auf der Sicherheit von GSM als auch auf der Sicherheit von TLS basiert. Sie kann nur kompromittiert werden, wenn die beiden Verfahren GSM und TLS in der konkreten Einsatzumgebung kompromittiert werden oder ein so schwerwiegender Angriff auf GSM möglich wird, dass das GSM- Verfahren während eines Laufs des hier beschriebenen Bootstrapping-Verfahrens kompromittiert werden kann.

In die Berechnung des kurzfristigen Schlüssels durch eine Schlüsselableitungsfunktion gehen die aus dem GSM Protokoll erhaltenen Parameter Kc und SRES (Signed Response) und Zufallszahlen ein, die durch die TLS Verschlüsselung geschützt als Teil des HTTP Digest AKA Protokolls von der BSF an das mobile Kommunikationsgerät vertraulich übertragen werden. Diese Zufallszahlen können beispielsweise im Feld "AKA-NONCE" gemäß der Spezifikation RFC 3310 übertragen werden, sowohl als Challenge RAND als auch als Teil von "Server Specific Data".

Durch die vorgeschlagenen Maßnahmen des erfindungsgemäßen Verfahrens ergeben sich insbesondere folgende Vorteile:
- Um den abgeleiteten kurzfristigen Schlüssel zu finden, muss ein Angreifer sowohl die GSM Parameter Kc und SRES als auch die vertraulich über TLS übertragenen Zufallszahlen finden, das heißt er muss sowohl das GSM Verfahren als auch die Verwendung des TLS Verfahrens angreifen. Hierdurch wird die Sicherheit gegenüber Angriffen erheblich erhöht.
- Die effektive Länge des abgeleiteten kurzfristigen Schlüssels kann gegenüber dem Vorschlag in S3-050053 deutlich erhöht werden durch die Verwendung von Zufallszahlen Ks-Input als Teil des zusätzlichen Parameters, ein Parameter der nicht Bestandteil vom GSM AKA ist. Hierdurch wird die Sicherheit gegenüber Angriffen nochmals gesteigert.

- Es ist nur die Verwendung einer einzigen Instanz von GSM AKA pro 2G GBA Instanz nötig. Dies führt zu einer deutlichen Reduzierung der Last auf dem GSM Authentifizierungscenter, verglichen mit dem Vorschlag in S3-050053.
- Für die Sicherheit des Vorschlags in S3-050053 ist es im Allgemeinen erforderlich, zuverlässig zu verhindern, dass ein Angreifer GSM Triplets, die in 2G GBA verwendet wurden, in einem anderen Kontext jemals wieder verwendet. Damit könnten die Parameter Kc und SRES beispielsweise durch einen Angriff auf einen Verschlüsselungsalgorithmus A5/1 oder A5/2 ermittelt werden und somit auch der kurzfristige Schlüssel von 2G GBA ermittelt werden. Dies wird in der Praxis aber nur schwer zu realisieren sein. Ein Angriff auf das hier beschriebene Verfahren wäre hingegen nur möglich, wenn ein Angreifer die GSM Parameter Kc und SRES während eines Protokolllaufs von 2G GBA ermitteln könnte. Dies ist aber nach heutigem Kenntnisstand für eine Periode von wenigen Sekunden nur für den Algorithmus A5/2 möglich, der jedoch auf Endgeräten, die 2G GBA unterstützen werden, nicht mehr erlaubt ist. Daher ist das vorgeschlagene Verfahren nicht nur wesentlich praktikabler als der Vorschlag in S3-050053, sondern auch die Sicherheit wird weiter erhöht.
- Ein weiterer Vorteil gegenüber dem Vorschlag in S3-050097 ist, dass die Sicherheit der vorliegenden Erfindung auf mehreren unabhängigen Faktoren beruht. Insbesondere kann das UE die BSF auch durch den Vergleich von berechnetem und empfangenem AUTN_{UMTS} authentifizieren. Demgegenüber beruht die Sicherheit des Vorschlags nach Qualcomm allein auf der sicheren Authentifikation von BSF mittels eines Zertifikates.

### Literatur:

| | |
|---|---|
| 3G S3-050053 | siehe |
| ftp://ftp.3gpp.org/TSG_SA/WG3_Security/TSGS3_37_Sophia/Docs/ | |
| | |
| 3G S3-050097 | siehe |
| ftp://ftp.3gpp.org/TSG_SA/WG3_Security/TSGS3_37_Sophia/Docs/ | |
| | |
| 3G TS 33.220 v6.4.0 | siehe ftp://ftp.3gpp.org/Specs/ |
| 3G TS 33.102 v6.3.0 | siehe ftp://ftp.3gpp.org/Specs/ |
| 3G TS 43.020 v6.1.0 | siehe ftp://ftp.3gpp.org/Specs/ |
| RFC 3310 | siehe http://www.ietf.org/rfc.html |
| RFC 2246 | siehe http://www.ietf.org/rfc.html |

## Patentansprüche

1. Verfahren zur Vereinbarung eines Sicherheitsschlüssels zwischen mindestens einem ersten und einem zweiten Kommunikationsteilnehmer zur Sicherung einer Kommunikationsverbindung, wobei
- aus einem Authentifikations- und Schlüsselableitungsprotokoll zumindest ein erster Parameter ermittelt wird,
- der zweite Kommunikationsteilnehmer einen zusätzlichen Parameter verschlüsselt an den ersten Kommunikationsteilnehmer überträgt, wobei das zur verschlüsselten Übertragung des zusätzlichen Parameters verwendete Verschlüsselungsprotokoll unabhängig von dem Authentifikations- und Schlüsselableitungsprotokoll ist,
- aus dem ersten Parameter und dem zusätzlichen Parameter der Sicherheitsschlüssel ermittelt wird.

2. Verfahren nach Anspruch 1, wobei
der zusätzliche Parameter in zumindest einen ersten und einen zweiten Teil unterteilbar ist.

3. Verfahren nach einem der vorhergehenden Ansprüche, wobei der zusätzliche Parameter eine Zufallszahl oder eine Verkettung einer Zufallszahl mit weiteren Daten ist.

4. Verfahren nach Anspruch 3, wobei ein Teil der Zufallszahl Bestandteil des Authentifikations- und Schlüsselableitungsprotokolls ist, aus dem der erste Parameter ermittelt wird.

5. Verfahren nach einem der vorhergehenden Ansprüche, wobei der erste Kommunikationsteilnehmer als ein mobiles Kommunikationsendgerät und der zweite Kommunikationsteilnehmer als Kommunikationsnetzeinrichtung ausgeführt ist.

6. Verfahren nach einem der vorhergehenden Ansprüche, wobei der zweite Kommunikationsteilnehmer sich gegenüber dem ersten Kommunikationsteilnehmer über ein Zertifikat mit einem öffentlichen Schlüssel authentifiziert.

7. Verfahren nach einem der vorhergehenden Ansprüche, wobei der erste Kommunikationsteilnehmer sich gegenüber dem zweiten Kommunikationsteilnehmer über das Authentizitäts- und Schlüsselableitungsprotokoll, aus dem der erste Parameter abgeleitet wird, authentifiziert.

8. Verfahren nach einem der Ansprüche 1 bis 6, wobei der erste Kommunikationsteilnehmer sich gegenüber dem zweiten Kommunikationsteilnehmer mit Hilfe eines dritten, auf die Verwaltung von Nutzern spezialisierten Kommunikationsteilnehmers authentifiziert.

9. Verfahren nach Anspruch 8, wobei der erste Kommunikationsteilnehmer als ein User Equipment (201), der zweite Kommunikationsteilnehmer als eine Bootstrapping Server Function (202) und der dritte Kommunikationsteilnehmer als ein Home Subscriber Server (203) ausgeführt ist.

10. Verfahren nach einem der vorhergehenden Ansprüche, wobei zur vertraulichen Übertragung des zusätzlichen Parameters als Sicherheitsprotokoll das Transport Layer Security TLS Protokoll verwendet wird.

11. Verfahren nach Anspruch 2, wobei
die zumindest zwei Teile des zusätzlichen Parameters in verschiedenen Feldern übertragen werden.

12. Verfahren nachAnspruch 11, wobei die Felder "RAND" und "Server Specific Data" umfassen.

13. Verfahren nach einem der vorhergehenden Ansprüche, wobei die Schlüsselableitungsfunktion als Key Derivation Function mit den Eingangsparametern Hashkey und Hashdata ausgebildet ist.

14. Verfahren nach Anspruch 13, wobei
der erste Teil des zusätzlichen Parameters in den Hashkey und der zweite Teil des zusätzlichen Parameters in die Hashdata eingeht.

15. Verfahren nach Anspruch 13, wobei
der erste Teil des zusätzlichen Parameters in den Hashkey und die Hashdata und der zweite Teil des zusätzlichen Parameters in den Hashkey eingeht.

16. Computerprogrammprodukt, das in einen Arbeitsspeicher einer Programmablaufsteuerungseinrichtung ladbar ist und zumindest einen Codeabschnitt aufweist, bei dessen Ausführung zur Vereinbarung eines Sicherheitsschlüssels zwischen mindestens einem ersten und einem zweiten Kommunikationsteilnehmer zur Sicherung einer Kommunikationsverbindung
- aus einem Authentifikations- und Schlüsselableitungsprotokoll zumindest ein erster Parameter ermittelt wird,
- der zweite Kommunikationsteilnehmer einen zusätzlichen Parameter verschlüsselt an den ersten Kommunikationsteilnehmer überträgt, wobei das zur verschlüsselten Übertragung des zusätzlichen Parameters verwendete Verschlüsselungsprotokoll unabhängig von dem Authentifikations- und Schlüsselableitungsprotokoll ist,
- aus dem ersten Parameter und dem zusätzlichen Parameter der Sicherheitsschlüssel ermittelt wird,
wenn das Steuerungsprogramm in der Programmablaufsteuerungsablaufeinrichtung abläuft.

## Claims

1. Method for agreeing between at least one first and one second communication subscriber a security key for the purpose of securing a communication link, in which
- at least one first parameter is determined from an authentication and key derivation protocol,
- the second communication subscriber transmits an additional parameter to the first communication subscriber, in a confidential manner such that the confidentiality protocol used for the confidential transmission of the additional parameter is independent of the authentication and key derivation protocol,
- the security key is determined from the first parameter and the additional parameter.

2. Method according to claim 1, in which
the additional parameter can be subdivided into at least a first and a second part.

3. Method according to one of the preceding claims, in which the additional parameter is a random number or a concatenation of a random number with other data.

4. Method according to claim 3, in which a part of the random number is a component of the authentication and key derivation protocol, from which the first parameter is determined.

5. Method according to one of the preceding claims, in which the first communication subscriber takes the form of a mobile communication terminal device and the second communication subscriber takes the form of a communication network device.

6. Method according to one of the preceding claims, in which the second communication subscriber authenticates itself to the first communication subscriber via a certificate with a public key.

7. Method according to one of the preceding claims, in which the first communication subscriber authenticates itself to the second communication subscriber via the authentication and key derivation protocol, from which the first parameter is derived.

8. Method according to one of claims 1 to 6, in which the first communication subscriber authenticates itself to the second communication subscriber with the help of a third communication subscriber which specialises in the administration of users.

9. Method according to claim 8, in which the first communication subscriber is implemented as a user equipment (201), the second communication subscriber as a bootstrapping server function (202) and the third communication subscriber as a home subscriber server (203).

10. Method according to one of the preceding claims, in which the transport layer security (TLS) protocol is used as the security protocol for the confidential transmission of the additional parameter.

11. Method according to claim 2, in which the at least two parts of the additional parameter are transmitted in different fields.

12. Method according to claim 11, in which the fields include GRAND" and "Server Specific Data".

13. Method according to one of the preceding claims, in which the key derivation function takes the form of a key derivation function with hashkey and hashdata as input parameters.

14. Method according to claim 13, in which the first part of the additional parameter goes into hashkey and the second part of the additional parameter into hashdata.

15. Method according to claim 13, in which the first part of the additional parameter goes into hashkey and hashdata, and the second part of the additional parameter into hashkey.

16. Computer program product which can be loaded into a working storage of a program execution control device and which has at least one section of code such that, when it is executed for the purpose of agreeing between at least one first and one second communication subscriber a security key for use in securing a communication link
- at least one first parameter is determined from an authentication and key derivation protocol,
- the second communication subscriber transmits an additional parameter to the first communication subscriber, in a confidential manner such that the confidentiality protocol used for the confidential transmission of the additional parameter is independent of the authentication and key derivation protocol,
- the security key is determined from the first parameter and the additional parameter,
when the control program is executed in the program execution control device.

## Revendications

1. Procédé pour convenir d'une clé de sécurité entre au moins un premier et un deuxième participants de communication pour sécuriser une communication,
- au moins un premier paramètre étant déterminé à partir d'un protocole d'authentification et de dérivation de clé,
- le deuxième participant de communication transmettant au premier participant de communication un paramètre supplémentaire de manière codée, le protocole de codage utilisé pour la transmission codée du paramètre supplémentaire étant indépendant du protocole d'authentification et de dérivation de clé,
- la clé de sécurité étant déterminée à partir du premier paramètre et du paramètre supplémentaire.

2. Procédé selon la revendication 1,
le paramètre supplémentaire étant divisible en au moins une première et une deuxième parties.

3. Procédé selon l'une quelconque des revendications précédentes,
le paramètre supplémentaire étant un nombre aléatoire ou un enchaînement d'un nombre aléatoire avec d'autres données.

4. Procédé selon la revendication 3,
une partie du nombre aléatoire faisant partie intégrante du protocole d'authentification et de dérivation de clé, à partir duquel le premier paramètre est déterminé.

5. Procédé selon l'une quelconque des revendications précédentes,
le premier participant de communication étant réalisé en tant que terminal de communication mobile et le deuxième participant de communication en tant que dispositif de réseau de communication.

6. Procédé selon 1"une quelconque des revendications précédentes,
le deuxième participant de communication s'authentifiant, par rapport au premier participant de communication, par l'intermédiaire d'un certificat avec une clé publique.

7. Procédé selon l'une quelconque des revendications précédentes,
le premier participant de communication s'authentifiant, par rapport au deuxième abonné, par l'intermédiaire du protocole d'authentification et de dérivation de clé à partir duquel le premier paramètre est dérivé.

8. Procédé selon l'une quelconque des revendications 1 à 6,
le premier participant de communication s'authentifiant, par rapport au deuxième abonné, à l'aide d'un troisième participant de communication spécialisé en gestion d'usagers.

9. Procédé selon la revendication 8,
le premier participant de communication étant réalisé en tant que User Equipment (201), le deuxième participant de communication en tant qu'une Bootstrapping Server Function (202) et le troisième participant de communication en tant qu'un Home Subscriber Server (203).

10. Procédé selon l'une quelconque des revendications précédentes,
le protocole Transport Layer Security TLS étant utilisé comme protocole de sécurité pour la transmission confidentielle du paramètre supplémentaire.

11. Procédé selon la revendication 2,
les au moins deux parties du paramètre supplémentaire étant transmises dans différents champs.

12. Procédé selon la revendication 11,
les champs comprenant « RAND » et « Server Specific Data ».

13. Procédé selon l'une quelconque des revendications précédentes,
la fonction de dérivation de clé étant réalisée comme Key Derivation Function avec les paramètres d'entrée Hashkey et Hashdata.

14. Procédé selon la revendication 13,
la première partie du paramètre supplémentaire entrant dans le paramètre Hashkey et la deuxième partie du paramètre supplémentaire entrant dans les Hashdata.

15. Procédé selon la revendication 13,
la première partie du paramètre supplémentaire entrant dans le paramètre Hashkey et dans les Hashdata et la deuxième partie du paramètre supplémentaire entrant dans le Hashkey.

16. Produit programme d'ordinateur qui est chargeable dans une mémoire de travail d'un dispositif de commande de déroulement de programme et qui présente au moins une section de code, lors de l'exécution duquel, pour convenir d'une clé de sécurité entre au moins un premier et un deuxième participants de communication pour sécuriser une communication,
- au moins un premier paramètre est déterminé à partir d'un protocole d'authentification et de dérivation de clé,
- le deuxième participant de communication transmet au premier participant de communication un paramètre supplémentaire de manière codée, le protocole de codage utilisé pour la transmission codée du paramètre supplémentaire étant indépendant du protocole d'authentification et de dérivation de clé,
- la clé de sécurité est déterminée à partir du premier paramètre et du paramètre supplémentaire,
lorsque le programme de commande se déroule dans le dispositif de commande de déroulement de programme.
